# EUROPÄISCHE PATENTSCHRIFT

(11) **EP 1 101 573 B1**
(45) Veröffentlichungstag und Bekanntmachung des Hinweises auf die Patenterteilung: **10.01.2007**
(21) Anmeldenummer: 00125097.6
(22) Anmeldetag: 17.11.2000
(51) Int. Cl.: B25G 1/10, G09F 3/00

(54) **Griff für ein Handwerkzeug und Verfahren zur Herstellung desselben**
Handle for a hand tool and method for producing same
Poignée pour outil à main et son procédé de fabrication

(30) Priorität: 19.11.1999 DE 29920323 U; 04.03.2000 DE 10010675; 04.03.2000 DE 20004135 U
(43) Veröffentlichungstag der Anmeldung: 23.05.2001
(73) Patentinhaber: Adolf Würth GmbH & Co. KG, 74653 Künzelsau (DE)
(72) Erfinder: Lieser, Karl, 52111 Wuppertaal (DE); Dierolf, Andreas, 74547 Untermünkheim (DE)
(74) Vertreter: Patentanwälte Ruff, Wilhelm, Beier, Dauster & Partner

(56) Entgegenhaltungen:
- EP-A- 0 208 942
- EP-A- 0 635 337
- WO-A-97/34740
- WO-A1-93/16846
- DE-A- 4 108 291
- DE-U- 9 202 550
- GB-A- 2 274 615
- US-A- 5 261 665
- US-A- 5 341 707

## Beschreibung

Die Erfindung betrifft einen Griff für ein Handwerkzeug und ein Verfahren zur Herstellung des Griffes.

Ein Griff noch dem Oberbegriff des Anspruchs 1 ist aus der WO-A-97/34740 bekannt.

Ein Verfahren nach dem Oberbegriff des Anspruchs 14 ist ZB. aus der WO-A-93/16846 bekannt.

Es sind Handwerkzeuge bekannt, die einen Griff aufweisen, der zweifarbig ausgebildet ist. Dabei werden beim Anspritzen des Griffes Kunststoffe unterschiedlicher Farbe in aufeinanderfolgenden Spritzvorgängen aufgespritzt. Dadurch wird ein zweifarbig gestalteter Greifbereich des Griffes erzeugt. Die mehrfarbige Gestaltung des Griffes im Greifbereich ermöglicht es, den Griff auffällig zu gestalten und daher die Auffindbarkeit des Werkzeuges zu erhöhen.

Ferner ist es bekannt, Griffe für Handwerkzeuge aus zumindest haptisch voneinander unterscheidbaren Bereichen herzustellen, wobei ein vorderer Bereich aus einem steiferen Material gefertigt wird und als Schnelldreh- oder Abstützzone dient, und wobei ein hinterer Bereich der guten, angenehmeren Greifbarkeit dient. Der hintere Bereich ist meist im Querschnitt polygonal und im Längsschnitt ballig ausgebildet. Als Material wird ein im Greifgefühl weiches, warmes, meist gummiartiges Material bevorzugt.

Bei derartigen Griffen ist es nachteilig, daß die Spritzansatzstelle für den Kunststoff vor allem des hinteren Bereichs im Greifbereich des Benutzers liegt. Die Spritzansatzstelle ist eine Stelle, an der die Oberfläche eine Störung, meist eine Erhebung aufweist und die zumeist auch eine Verhärtung der Oberfläche an dieser Stelle aufweist. Dies stört die Benutzung des Werkzeuges, da insbesondere bei Drehwerkzeugen die Spritzansatzstelle ständig und wiederkehrend in den Bereich hoher Empfindlichkeit der Hautoberfläche gelangt. Es wird ein unangenehmes Greifgefühl erzeugt.

Es ist bereits ein Werkzeuggriff mit einer Markierung bekannt, bei dem der Greifbereich des Werkzeuggriffs eine Ummantelung aus einem weicheren Kunststoff aufweist. Diese Ummantelung ist auf den Griffkern aufgespritzt (WO97/34740).

Ebenfalls bekannt ist ein Werkzeughandgriff insbesondere für Schraubendreher (DE 9202550; WO93/16846), bei dem auf einen aus Kunststoff bestehenden Griffkern eine Ummantelung aus einem weicheren Kunststoff durch Kanäle in einer Spritzform aufgespritzt wird.

Ebenfalls bekannt ist es (US-5341707), an dem der Klinge des Schraubendrehers abgewandten Ende des Griffs eine Markierung erhaben oder vertieft anzubringen, damit diese Markierung auch bei schlechten Lichtverhältnissen erfühlt werden kann.

Aufgabe der Erfindung ist es, einen Griff für ein Handwerkzeug zu schaffen, dessen Oberfläche aus Bereichen unterscheidbarer Werkstoffe gebildet wird und der gleichzeitig eine gute und angenehme Greifbarkeit aufweist.

Diese Aufgabe wird bei zu Grunde legen der gattungsgemäßen Merkmale durch die kennzeichnenden Merkmale der unabhängigen Patentansprüche gelöst.

Ein erfindungsgemäßer Griff für ein Handwerkzeug, insbesondere für ein Drehwerkzeug, besteht aus Kunststoff. Er weist eine Oberfläche aus aneinander bündig anschließenden Bereichen unterscheidbarer Werkstoffe auf. Der Griff besteht aus einem ersten Werkstoff, der einen Kern bildet und der erhabene Abschnitte aufweist, die Oberflächenbereiche bilden. Dabei wird zumindest im Bereich des werkzeugseitigen Endes des Griffes die Oberfläche des Griffes aus erstem Werkstoff gebildet. Dabei sind in diese Oberflächenbereiche aus erstem Werkstoff wenigstens ein Fließkanal, der bis an die Griffoberfläche des Griffes reicht, ausgebildet. Auf den Kern wird ein zweiter Werkstoff aufgespritzt, der in anderen Bereichen die Oberfläche des Griffes bildet. Die beiden Werkstoffe sind voneinander unterscheidbar. Dabei ist die Spritzansatzstelle für den zweiten Werkstoff so angeordnet, daß sie außerhalb des Griffbereichs des Griffes liegt.

Gemäß einer vorteilhaften Ausgestaltung bildet der zweite Werkstoff einen einteiligen Formkörper.

Die Bereiche der Oberfläche des Griffes aus dem ersten Werkstoff sind also dem äußeren Anschein nach intarsienartig in Bereiche aus dem zweiten Werkstoff eingebettet.

Gemäß bevorzugter Ausführungsform der Erfindung sind die Werkstoffe so gewählt, daß sie haptisch und/oder optisch voneinander unterscheidbar sind. Vorzugsweise weist der zweite Werkstoff dabei einen größeren Haftreibungskoeffizienten als der erste Werstoff auf.

Weiter vorteilhaft ist es, wenn die Bereiche der Oberfläche aus dem ersten Werkstoff am werkzeugseitigen Ende allseitig von kontinuierlichen Oberflächenbereichen aus zweitem Werkstoff umschlossen sind.

Gemäß weiterer, vorteilhafter Ausgestaltung der Erfindung weist die Oberfläche an dem Ende des Griffes, das dem Werkzeug abgewandt ist, eine kappenartige Oberfläche aus erstem Werkstoff auf.

Gemäß weiter bevorzugter Ausgestaltung der Erfindung ist die Oberfläche des Griffes als Informationsträger ausgebildet. Bevorzugt ist eine Ausgestaltung, bei der die Information in der Ausbildung der Bereichsgrenzen zwischen Oberflächen aus erstem und zweitem Werkstoff enthalten ist. Die Information kann dabei auch die Qualität, den Anwendungszweck, den Hersteller (Herstellername oder Herstellerlogo) und den Herstellungsort betreffen. Diese Informationen müssen möglichst unverlierbar und gut sichtbar auf der Oberfläche des Griffes angebracht werden. Vorteilhaft ist es auch, wenn die Bereichsgrenzen zwischem erstem und zweitem Werkstoff so ausgebildet sind, daß die Form der Bereiche des ersten Werkstoffes den Anwendungszweck des Werkzeugs repräsentiert. So kann beispielsweise die kappenartige Oberfläche aus erstem Werkstoff die Kontur eines Kreuzes aufweisen, um zu symbolisieren, daß es sich bei dem Werkzeug um einen Schraubendreher für Kreuzschlitzschrauben handelt. Eine sechseckige Umrißlinie der Außenkontur der kappenartigen Oberfläche aus erstem Werkstoff kann dabei einen Außenvielkant-Schraubendreher symbolisieren. Somit ist der Informationsträger so ausgebildet, daß die Information einerseits unauslöschbar aufgebracht ist und dennoch eine glatte Oberflächenkontur vorhanden ist.

Dabei ist es auch möglich, daß in nach außen hin abgeschlossene Bereiche aus erstem Werkstoff intarsienartige Bereiche des zweiten Werkstoffes eingelegt sind. Dies kann beispielsweise dadurch erfolgen, daß in die diesen Bereich nach außen hin abschließenden Bereiche aus erstem Werkstoff unterhalb der Oberfläche liegende Durchflußkanäle eingeformt sind, durch die beim Anspritzen des zweiten Werkstoffes Werkstoff hindurchfließt und so in den ansonsten nach außen hin abgeschlossenen Bereich aus erstem Werkstoff einfließen kann.

Bei einem Griff für ein Handwerkzeug kann vorteilhafterweise zusätzlich auch die an seinem werkzeugseitigen Ende ausgebildete, im wesentlichen radial ausgerichtete Stirnseite als Informationsträger ausgebildet sein. Gemäss bevorzugter Ausgestaltung ist die Information durch optisch erfaßbare Konturlinien auf der Stirnseite gebildet. Vorzugsweise werden die Konturlinien durch ein Relief auf der Stirnseite ausgebildet. Alternativ ist es gemäss einer bevorzugten Ausgestaltung der Erfindung möglich, die Konturlinien als Grenze zwischen wenigstens optisch voneinander unterscheidbaren Werkstoffen auszubilden.

Alternativ und zusätzlich ist es auch möglich, daß im Bereich der Bereichsgrenzen zwischen erstem und zweitem Werkstoff unterhalb der Oberfläche liegende Hinterschneidungen der Werkstoffe gegeben sind, um einen besseren Halt der Werkstoffe aneinander zu erzielen. Darüber hinaus kann es allgemein von Vorteil sein, wenn der aus erstem Werkstoff gebildete Kern in axialer Richtung verlaufende Verrippungen aufweist, die mit Material des zweiten Werkstoffes aufgefüllt werden und so für eine gegeneinander verdrehgesicherte Halterung des zweiten Werkstoffes auf dem ersten Werkstoff bewirken. An den Grenzstellen zwischen Bereichen aus erstem Werkstoff und Bereichen aus zweitem Werkstoff ist es vorteilhaft, Hinterschneidungen vorzusehen, um eine lagestabilere Halterung, insbesondere der Bereiche zweiten Werkstoffes, zu erzielen.

Gemäß weiterer Ausgestaltung der Erfindung ist der Griff unverlierbar an einem Werkzeug angeformt. Bei dem Werkzeug handelt es sich vorzugsweise um einen Schraubendreher.

Weiter bevorzugt sind Ausgestaltungen, bei denen der Griff einen verrippten Greifabschnitt aufweist. Die Verrippung des Greifabschnittes dient vorteilhafterweise zur besseren Kraftübertragung zwischen Hand und Griff. Vorteilhaft ist es, wenn zwischen dem verrippten Greifabschnitt und dem werkzeugseitigen Ende des Griffes ein Abschnitt mit kreisförmigen Querschnitt gegeben ist, der eine Durchmesserverjüngung, die sowohl zum Griffabschnitt hin als auch zum werkzeugseitigen Ende hin konkav erweitert ist, aufweist und so als Abstütz- oder Schnelldrehzone ausgebildet ist. Vorzugsweise ist die Oberfläche des Griffes in der Schnelldrehzone mindestens zum Teil, vorzugsweise überwiegend aus erstem Werkstoff gebildet. Dies sind insbesondere Ausgestaltungen, bei denen zwei oder mehr Bereiche aus erstem Werkstoff vorhanden sind, die durch Fließkanäle aus zweitem Werkstoff voneinander getrennt sind. Weiter bevorzugt sind Ausgestaltungen, bei denen das kappenförmige Ende aus erstem Werkstoff die Form einer Kugelkalotte aufweist. Weiter vorteilhaft ist es, wenn die Stirnseite des Griffs zumindest überwiegend aus erstem Werkstoff gebildet wird. Weiter bevorzugt ist an der Stirnseite des Griffs nach außen hin ein Ring aus zweitem Werkstoff ausgebildet, der den stirnseitigen Bereich des ersten Werkstoffes umrahmt, wobei der stirnseitige Bereich des ersten Werkstoffs sichtbar bleibt.

Ein erfindungsgemäßes Verfahren zur Herstellung eines erfindungsgemäßen Griffes umfaßt die Schritte des Einlegens des Spritzkerns in eine erste, als Matrize für den Spritzguß des ersten Werkstoffes dienenden Form und das Umspritzen des Spritzkernes mit einem ersten Werkstoff. Anschließend wird der umspritzte Kern in eine zweite Spritzform eingelegt, die als Matrize für die Gesamt-Oberfläche des Griffes ausgebildet ist. Dann wird von einer außerhalb des Griffbereiches des Griffes liegenden Anspritzstelle her der zweite Werkstoff, der vom ersten Werkstoff unterscheidbar ist, aufgespritzt, wobei das Anspritzen des ersten Werkstoffes derart erfolgt, daß im ersten Werkstoff wenigstens ein Fließkanal ausgebildet ist, so daß der zweite Werkstoff ein einteilig zusammenhängendes Formteil ergibt.

Bei dem ersten Werkstoff handelt es sich dabei vorzugsweise um PPN. Bei dem zweiten Werkstoff handelt es sich dabei vorzugsweise um ein Elastomer, insbesondere ein thermoplastisches Elastomer. Als Spritzkern dient vorzugsweise das eigentliche Werkzeug, z.B. die Klinge eines Schraubendrehers.

Im übrigen ist die Erfindung auch noch anhand der in der Zeichnung dargestellten bevorzugten Ausführungsform näher erläutert. Dabei zeigt:
- Fig. 1: einen auf einem Spritzkern aufgespritzten Griff und
- Fig. 2: den teilfertig hergestellten Griff nach dem Aufspritzen des ersten Werkstoffes;
- Fig. 3 und 4: ein anderes Ausführungsbeispiel eines erfindungsgemäßen Griffes;
- Fig. 5: eine Seitenansicht eines Griffes mit stirnseitigem Informationsträger;
- Fig. 6: die Aufsicht auf die Stirnseite eines anderen Griffes mit stirnseitigem Informationsträger;
- Fig. 7: das Flußdiagramm eines erfindungsgemäßen Verfahrens.

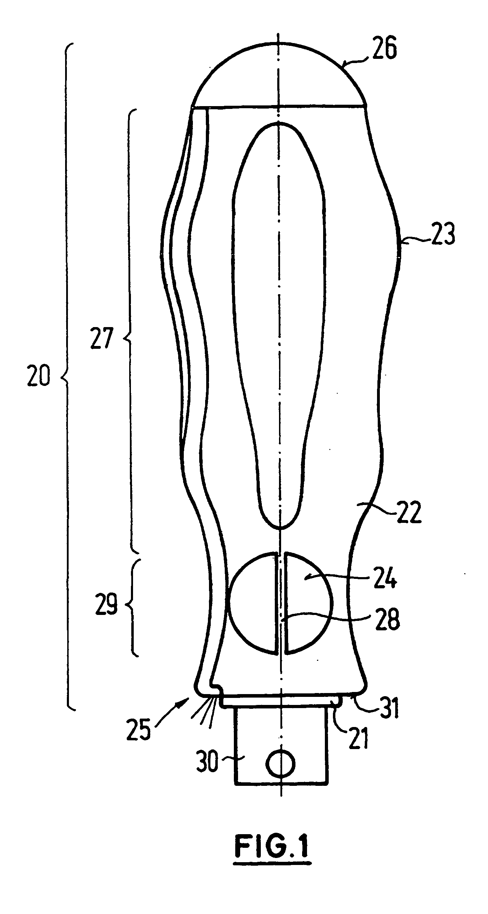

Fig. 1 zeigt die Ansicht eines Griffes eines Drehwerkzeugs, beispielsweise eines (Schlitz-)Schraubendrehers. Dabei ist um einen Spritzkern 30 herum der Griff aufgespritzt.Dabei kann es sich bei dem Spritzkern 30 sowohl um das Werkzeug selbst, also die Klinge des Schraubendrehers handeln, als auch um einen Spritzkern, der nachträglich entweder als Fassung für ein Wechselwerkzeug oder als reines Füllstück für den Spritzvorgang, das anschließend entfernt wird, ausgebildet sein. Handelt es sich bei dem umspritzten Spritzkern 30 um die Klinge oder den Schaft eines Werkzeuges, so ist dieser im Griffbereich nicht glattflächig ausgebildet, um so ein gutes, verliersicheres Umspritzen des Spritzkernes zu ermöglichen.

Der Griff 20 weist an seinem dem Werkzeug abgewandten Ende ein massives kugelkalottenförmiges Oberflächenteil 26 aus dem ersten Werkstoff auf. Der erste Werkstoff bildet auch den Kern 21, der den Spritzkern 30 im Bereich des Griffes 20 umschließt. An den Bereich des kalottenförmigen Oberflächenteils 26 schließt sich der Greifbereich 27 des Griffes an. Dieser weist eine verrippte Struktur auf, damit eine bessere Kraftübertragung von der Hand auf das Werkzeug ermöglicht wird. Vorzugsweise hat der Greifbereich 27 im wesentlichen die Außenkontur eines Fünfflächners. Die Oberfläche 23 des Greifbereiches ist Teil des Bereiches 22, dessen Oberfläche aus dem zweiten Werkstoff gebildet wird. Bei dem zweiten Werkstoff handelt es sich vorzugsweise um ein Elastomer, insbesondere um ein thermoplastisches Elastomer. Dabei weist der zweite Werkstoff vorzugsweise einen größeren Haftreibungskoeffizienten auf als der erste Werkstoff. Auf die Gesamtoberfläche des Griffes bezogen überwiegt dabei die aus dem zweiten Werkstoff gebildete Oberfläche, der Greifbereich 27 ist dabei gemäß der dargestellten Ausführung wenigstens nahezu ausschließlich aus zweitem Werkstoff gebildet. Der zweite Werkstoff bildet darüberhinaus einen einteiligen, zusammenhängenden Formkörper. Die Bereiche der Oberfläche aus unterscheidbaren Werkstoffen schließen sich dabei bündig aneinander an, so daß allenfalls eine Übergangslinie seh- bzw. fühlbar ist, wie dies auch bei Intarsien der Fall ist. Dabei soll im Übergangsbereich eine möglichst kontinuierliche Außenkontur gebildet sein, so daß keine Kante gebildet ist.
Die Fühlbarkeit des Übergangs zwischen den Bereichen unterschiedlichen Werkstoffes soll allein durch die haptisch erfaßbare Unterscheidbarkeit der Werkstoffe bedingt sein. Um eine gute Anbindung zwischen den Bereichen ersten und zweiten Werkstoffes zu erzielen, können unter der Oberfläche Hinterschneidungen vorgesehen sein.

An den Greifbereich 27 schließt sich eine Schnelldrehzone 29 an. Die Schnelldrehzone 29 ist ein nicht verrippter Bereich des Griffes, der die engste Stelle des Griffes aufweist und von der engsten Stelle aus beidseitig konkav aufgeweitet ist. Mit der einen konkav aufgeweiteten Seite schließt sie sich nahtlos an den Greifbereich 27 an. Die andere konkav aufgeweitete Seite der Schnelldrehzone 29 mündet in dem werkzeugseitigen Ende des Griffes, der von der Stirnseite 31 zum Werkzeug hin beendet wird. Die Schnelldrehzone 29 weist Oberflächenbereiche 24 auf, die aus erstem Werkstoff gebildet sind und die als gegenüber dem restlichen Kern 21 als erhabene Vorsprünge ausgebildet sind. Dabei ist der Oberflächenbereich 24 bündig zur restlichen Oberfläche des Griffes in diesem Bereich. Dabei kann die Grenzlinie zwischen dem Oberflächenbereich 23 aus dem zweiten Werkstoff und dem Oberflächenbereich 24 aus dem ersten Werkstoff als Informationsträger ausgebildet sein. Um diese Information zu vermitteln, können die beiden Werkstoffe von unterschiedlicher Farbe sein, sie sind also optisch voneinander unterscheidbar. Dabei vermittelt die Kontur der Grenzlinie zwischen den beiden Werkstoffen die Information. Es handelt sich im dargestellen Fall um einen Kreis mit einem Schlitz. Dieses Symbol kann beispielsweise eine Schlitzschraube repräsentieren und damit signalisieren, daß es sich bei dem Werkzeug um einen Schlitz-Schraubendreher handelt. Dabei sind zwischen den Informationselementen Fließkanäle (Werkstoffbrücken) für das Material des zweiten Werkstoffes vorhanden. Alternativ zu einer solchen Ausgestaltung ist es auch möglich, daß im Bereich der Schnelldrehzone die Oberfläche aus erstem Werkstoff 24 überwiegt und lediglich schmale Fließkanäle 28 aus dem zweiten Werkstoff gebildet wird. Dabei liegt dann zwischen dem Bereich aus erstem Werkstoff und der Stirnseite 31 noch ein vorzugsweise schmaler Ring aus zweitem Werkstoff, so daß aus dem zweiten Werkstoff ein zusammenhängender, einstückiger Formkörper gebildet wird. Dabei ist die Lage der Anspritzstelle 25 für den zweiten Werkstoff so gewählt, daß er entweder im Bereich des Ringes oder aber im Bereich der Stirnseite 31 liegt. In jedem Fall liegt er außerhalb des Griffbereiches 27 und außerhalb der Schnelldrehzone 29 am werkzeugseitigen Ende des Griffes.

Für weitere Ausgestaltungen können beispielsweise für zur Informationsvermittlung geeignete Konturen und Grenzlinien zwischen erstem und zweitem Werkstoff zur Bildung von Bereichen des zweiten Werkstoffes vorgesehen sein, die an der Oberfläche vollständig von erstem Werkstoff umschlossen sind. Hierfür sind vorzugsweise im Bereich des ersten Werkstoffes Kanäle vorzusehen, die unterhalb der Oberfläche in den Abschnitten des erhabenen Teils ersten Werkstoffes, der die Oberflächenteile des ersten Werkstoffes bildet, auszubilden, durch die der innen liegende Bereich mit Material des zweiten Werkstoffes verfüllt werden kann. Dabei können die Kanäle auch die Aufgabe übernehmen, das umschlossene Material aus zweitem Werkstoff sicher am Griff zu halten. Dies kann auch dadurch unterstützt oder ersetzt werden, daß im Bereich der Grenzlinien Hinterschneidungen zwischem ersten und zweitem Werkstoff ausgebildet werden. So sind insgesamt am werkzeugseitigen Ende des Griffes vorzugsweise diskontinuierliche Bereiche der Oberfläche aus dem ersten Werkstoff gebildet.

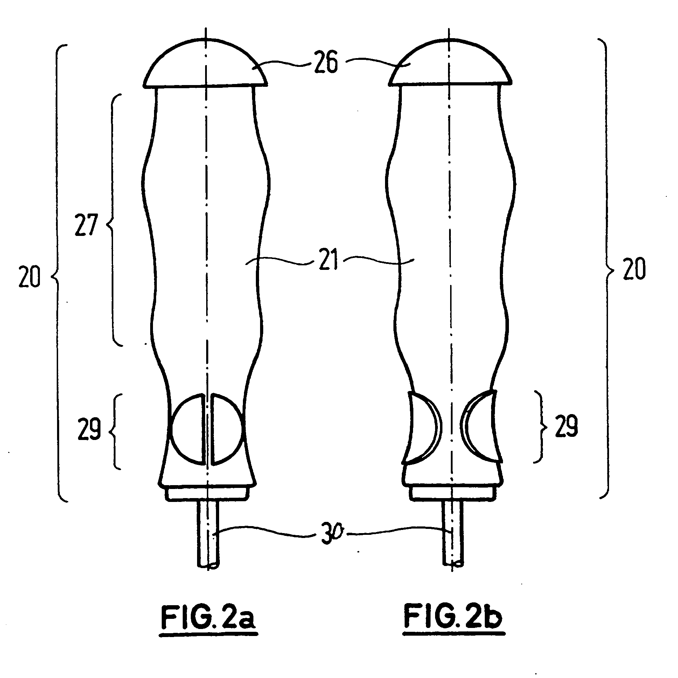

Die Figur 2 zeigt den teilweise fertiggestellten Griff nach dem Aufspritzen des Aufspritzkernes 21 und der erhabenen Bereiche, die die Bereiche 26, 24 der Oberfläche aus dem ersten Werkstoff - vorzugsweise PPN - bilden. Dabei zeigt die Teilfigur b) einen gegenüber der Teilfigur a) um 90° gedrehte Ansicht.

In der Figur 2 ist der Spritzkern 30 mit dem darauf aufgespritzten Kern 21 aus dem ersten Werkstoff dargestellt. Dabei ist der Griff 20 im Bereich des kappenartigen Oberteils 26 gegenüber der Kontur des Kerns 21 genauso erhaben, wie im Bereich 24 der Oberfläche aus dem ersten Werkstoff. Im Greifbereich 27 sowie in allen anderen Bereichen, deren Oberfläche später aus dem zweiten Werkstoff gebildet werden soll, ist eine Ausparung für das Material des zweiten Werkstoffes vorhanden, die der späteren Schichtdicke von vorzugsweise mehreren Millimetern des zweiten Werkstoffes entspricht. Um dieses Maß sind auch die Bereiche, die erhaben sind und die Oberflächenbereiche aus erstem Werkstoff bilden, gegenüber dem restlichen Kern 21 erhaben.

Figur 2 zeigt mit den beiden Teilansichten a) und b) das Verfahrensprodukt nach dem ersten Verfahrensschritt. Es ist gleichzeitig auch eine Matrize für das Spritzwerkzeug dargestellt, das für das Umspritzen des Spritzkerns 30 mit dem Material des ersten Werkstoffes benötigt wird. Die Spritzform wird vorzugsweise aus zwei Halbschalen gebildet, die verschlossen werden und in die der Spritzkern 31 eingelegt werden kann, wobei er gleichzeitig im Spritzwerkzeug ausgerichtet ist. Dabei erfolgt nach dem Schließen der Spritzform das Anspritzen des Materials des ersten Werkstoffes. Anschließend wird das teilfertige "Halbzeug" aus der Spritzform herausgenommen und gegebenenfalls nach einer kurzen Abkühl- und/oder Aushärtezeit in eine zweite Spritzform eingelegt. Die zweite Spritzform weist als Kontur die angestrebte Oberflächenkontur des Griffes 20 auf. Eine entsprechende Matrize dieser Spritzform wäre also in Figur 1 dargestellt. Es erfolgt nun das Einspritzen des zweiten Werkstoffes. Das Spritzen des zweiten Werkstoffes in die Spritzform erfolgt über eine Anspritzstelle, die im Bereich des werkzeugseitigen Endes des Griffes, der sich jedoch außerhalb des Greifbereiches befindet. Vorzugsweise ist dies im Bereich der Stirnseite des Griffes.

Dabei ist in den erhabenen Bereichen des ersten Werkstoff wenigstens ein Fließkanal für das Material des zweiten Werkstoffes eingespritzt.

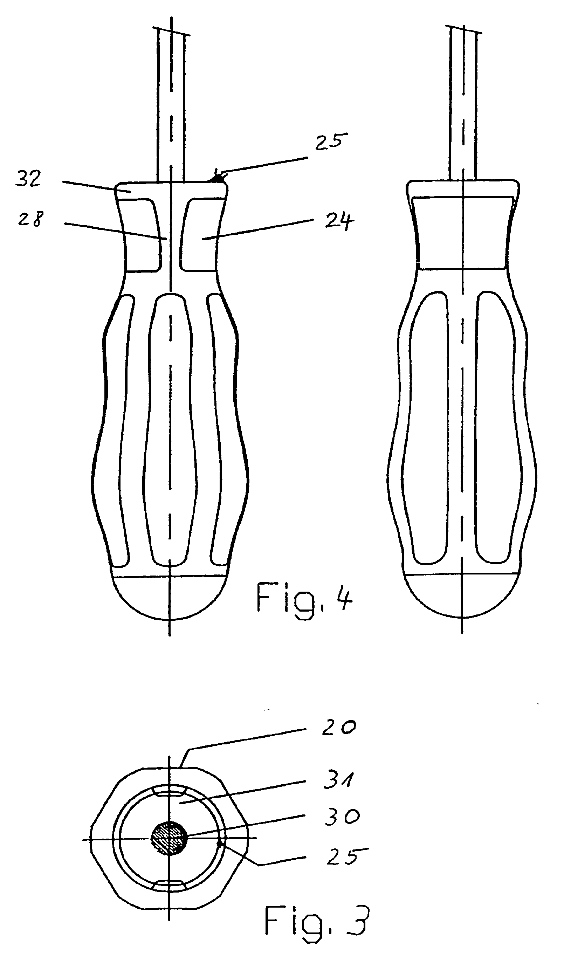

Die Figuren 3 und 4 zeigen ebenfalls einen Griff, der aus zwei Kunststoffen hergestellt ist. Ein Kerngriff 21 wird aus einem Hartkunststoff gespritzt, und auf den Kerngriff 21 in einer zweiten Spritzgießschicht ein Mantel 22 oder Felder aus Weichkunststoff (Elastomerkunststoff) mit anderer Farbe als die des Kerngriffes 21 aufgespritzt.

Da bei Elastomerkunststoffen 22 die Haftung von Druckfarben sehr schlecht ist, wird in einer Zone 24 der Griffoberfläche der Kerngriff nicht mit einem Mantel aus Elastomer 23 umhüllt. Unter dem Gesichtspunkt, eine gute Haptik des Griffes zu erzielen und hohe Drehmomente übertragen zu können, bietet sich der Griffhals 29 als nicht ummantelte Zone an. Hier liegen die Fingerspitzen an, sie drehen den Griff beim schnellen Schrauben mit niedrigem Drehmoment. Ein Ring aus Weichkunststoff schließt den Griffhals 29 ab und verhindert ein Überrutschen der Finger, bzw. die Notwendigkeit einer hohen Haltekraft.

Weiterhin wird der Anguss 25 für den Weichmantel 22 an eine Stelle des Griffes gelegt, wo es einerseits möglich ist, den Angußkanal 25 in die Form-Trennebene zu legen, was den Anguss technisch sehr einfach macht, andererseits ein am Griff verbleibender kleiner Angußnippel jedoch nicht stört. Eine solche Stelle ist die Stirnseite 31 des Griffkopfes, oder ein kurzer, axialer Ansatz an der Stirnseite. Die Verbindung vom Angußbereich am Griffkopf zu dem ummantelten Bereich des Griffes wird über die Verbindungsstege 28 oder -Kanäle hergestellt, die durch die nicht ummantelte Zone 24 des Griffhalses 29 verlaufen.

Ein solcher im Spritzgießverfahren hergestellter Griff aus Kunststoff ist also dadurch gekennzeichnet, dass der zweite Kunststoff 22 ein Elastomerkunststoff ist, der die Griffoberfläche, unter Freilassung der Griffkappe 26 am der Klinge abgewendeten Ende des Griffes und des größten Teiles des Griffhalses 29, bedeckt. Der Anguss für den Mantel aus Elastomerkunststoff liegt dabei im Bereich der Stirnseite 31. Die Verbindung zwischen dem Angußbereich und dem hinteren Griffbereich wird dabei durch Stege 28 oder Kanäle gebildet, die den Griffhals in axialer Richtung durchlaufen.

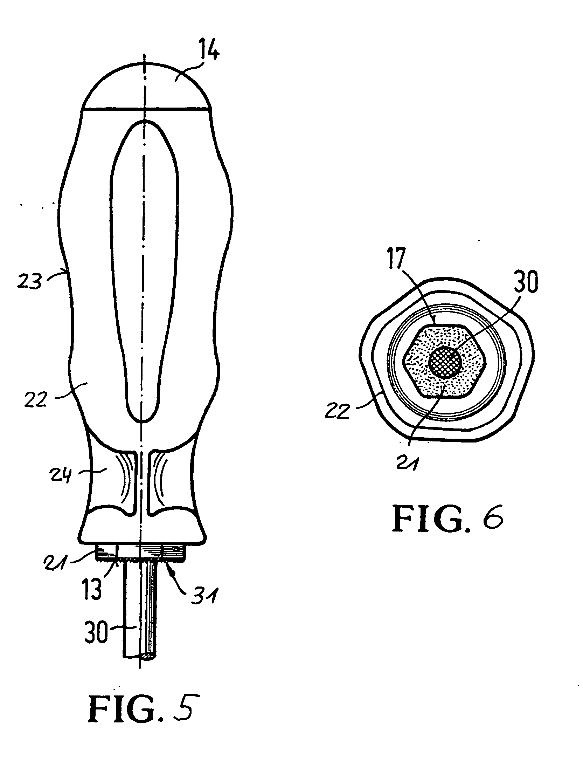

Die Fig. 5 zeigt die Seitenansicht eines erfindungsgemäßen Griffes. Der Griff weist einen Spritzkern 30 auf. Um den Spritzkern ist ein Kern 21 aus erstem Werkstoff aufgespritzt. Dabei erstreckt sich der Kern 21 bis an die radial verlaufende, werkzeugseitig ausgebildete Stirnseite 31 des Griffes. Abgesehen von dem Oberflächenbereich 24 aus dem ersten Werkstoff - der die Oberfläche des Griffes im Bereich der Schnelldrehzone 24 teilweise bildet - und abgesehen von dem kugelkalottenförmigen Endbereich an dem werkzeugabgewandten Ende des Griffes wird die Oberseite des Griffes aus dem Oberflächenbereich 23 aus dem zweiten Werkstoff gebildet.

Dies ist insbesondere im Greifbereich des Griffes der Fall. Der zweite Werkstoff, es handelt sich dabei vorzugsweise um einen thermoplastischen Elastomer, ummantelt dabei den ersten Werkstoff, vorzugsweise beispielsweise PPN, in all den Bereichen, in denen nicht der erste Werkstoff die Oberfläche des Griffes bildet. Gemäss bevorzugter Ausgestaltung ist die Ummantelung 22 mit dem zweiten Werkstoff als einstückiges zusammenhängendes Bauteil ausgebildet.

Der aus dem ersten Werkstoff gebildete Kern 21 des Griffes steht dabei weiter in Richtung auf das Werkzeug vor als das eigentliche Griffende. Entweder seine Außenkontur in diesem Bereich und/oder ein auf der Stirnseite 31 ausgebildetes Relief 13 dient der Vermittlung der Informationen, beispielsweise des Verwendungszweckes des am Griff befestigten Werkzeuges, als Herstellerkennzeichnung oder dergleichen.

In Figur 6 ist die Aufsicht auf die Stirnseite 31 eines erfindungsgemäßen Griffes gezeigt. Dabei ist eine Alternative zu der Ausführungsform der Figur 1 dargestellt, in der die Ummantelung 22 bis an das vordere, werkzeugseitige Ende des Griffes und somit bis an die Endfläche der Stirnseite 31 herangezogen ist. Der Kern 21 steht nicht in axialer Richtung bezüglich der Stirnseite 31 im übrigen Bereich vor. Die Kontur 17 zwischen dem ersten Werkstoff, der den Kern des Griffes 31 bildet, und der um den Spritzkern 30 herum aufgespritzt ist, und dem Bereich aus zweitem Werkstoff, der die Ummantelung 22 bildet und der um den Kern 21 des Griffes herum aufgespritzt ist, dient der Informationsvermittlung. Im dargestellten Beispiel ist die Konturlinie 17 als Sechseck ausgebildet. Das Sechseck soll symbolisieren, dass es sich bei dem Werkzeug um einen Schraubendreher handelt, der für Außen-Sechskantschrauben verwendet werden kann. Dabei ist es besonders vorteilhaft, wenn die beiden Materialien optisch voneinander unterscheidbar sind, vorzugsweise eine unterschiedliche Farbe aufweisen. Im Zentrum der Stirnseite befindet sich der Spritzkern 30. Bei dem Spritzkern kann es sich sowohl um einen nur zum Spritzvorgang dienenden Kern handeln, der entweder nachträglich entfernt wird oder aber als Aufnahme für Wechselwerkzeuge dient, die in den Griff eingesetzt werden können. Andererseits kann es sich bei dem Spritzkern 30 auch um den Schaft bzw. die Klinge eines Werkzeuges handeln, der unverlierbar in den Griff eingespritzt ist.

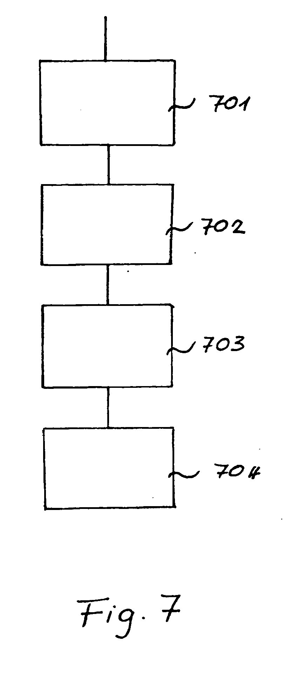

Ein erfindungsgemäßes Verfahren zur Herstellung eines erfindungsgemäßen Griffes ist in der Figur 7 dargestellt. Gemäss dem Schritt 701 wird der Spritzkern in eine erste, als Matrize für den Spritzguss des ersten Werkstoffes dienenden Form eingelegt. Dann erfolgt nach Schritt 702 das Umspritzen des Spritzkernes mit einem ersten Werkstoff. Anschließend wird gemäss Schritt 703 der umspritzte Kern in eine zweite Spritzform eingelegt, die als Matrize für die Gesamt-Ober= fläche des Griffes ausgebildet ist. Dann wird in Schritt 704 von einer außerhalb des Griffbereiches des Griffes liegenden Anspritzstelle her der zweite Werkstoff, der vom ersten Werkstoff unterscheidbar ist, aufgespritzt. Das Anspritzen des ersten Werkstoffes erfolgt derart, dass im ersten Werkstoff wenigstens ein Fließkanal ausgebildet ist, so dass der zweite Werkstoff ein einteilig zusammenhängendes Formteil ergibt.

## Patentansprüche

1. Griff für ein Handwerkzeug mit Klinge, insbesondere für ein Drehwerkzeug, mit einem Greifbereich (27) und einem Schnelldrehbereich (29), wobei der Griff einen aus einem ersten Kunststoffmaterial bestehenden Griffkern (21) und eine auf diesen aufgespritzte Ummantelung aus einem von dem Material des Griffkerns (21) unterscheidbaren Kunststoffwerkstoff aufweist, die mindestens in dem Greifbereich (27) die Griffoberfläche bildet, **dadurch gekennzeichnet, dass** der Griffkern (21) erhabene Abschnitte bzw. Vorsprünge (24) zumindest im klingennahen Bereich aufweist, die einen durch wenigstens einen Fließkanal (28) aus dem zweiten Werkstoff durchbrochenen Bereich bilden,und dass die Spritzansatzstelle (25) für den Werkstoff der Ummantelung außerhalb des Greifbereichs (27) des Griffs, an dessen werkzeugseitigem Ende (31), angeordnet ist.

2. Griff für ein Handwerkzeug nach Anspruch 1, bei dem der zweite Werkstoff einen einteiligen Formkörper bildet.

3. Griff nach einem der vorhergehenden Ansprüche, bei dem die Werkstoffe haptisch und/oder optisch voneinander unterscheidbar sind.

4. Griff nach einem der vorhergehenden Ansprüche, bei dem der zweite Werkstoff einen größeren Haftreibungskoeffizienten aufweist als der erste Werkstoff.

5. Griff nach einem der vorhergehenden Ansprüche, bei dem im klingennahen Bereich des Griffs diskontinuierliche Bereiche des ersten Werkstoffes die Griffoberfläche bilden und diese Bereiche allseitig von kontinuierlichen Oberflächenbereichen aus zweitem Werkstoff umschlossen sind.

6. Griff nach einem der vorhergehenden Ansprüche, bei dem die Oberfläche an dem Ende, das dem Werkzeug abgewandt ist, eine kappenartige Oberfläche (26) aus erstem Werkstoff aufweist.

7. Griff nach einem der vorhergehenden Ansprüche, bei dem die Oberfläche des Griffes als Informationsträger ausgebildet ist, wobei die Information insbesondere in der Ausbildung der Bereichsgrenzen zwischen Oberflächenbereichen aus erstem und zweitem Werkstoff enthalten ist.

8. Griff nach Anspruch 7, bei dem die Bereichsgrenzen zwischen erstem und zweitem Werkstoff so ausgebildet sind, daß die Kontur der Bereiche des ersten Werkstoffes den Anwendungszweck des Werkzeuges repräsentieren.

9. Griff nach einem der vorhergehenden Ansprüche, bei dem der Griff unverlierbar an einem Werkzeug insbesondere einem Schraubendreher angeformt ist.

10. Griff für ein Handwerkzeug nach einem der vorhergehenden Ansprüche, bei dem die Stirnseite als Informationsträger ausgebildet ist.

11. Griff nach Anspruch 10, bei dem die Information durch optisch erfaßbare Konturlinien (17) auf der Stirnseite gebildet wird, wobei die Konturlinien (17) vorzugsweise als ein Relief (13) auf der Stirnseite ausgebildet sind.

12. Griff nach Anpruch 11, bei dem die Konturlinien (17) als Grenze zwischen wenigstens optisch voneinander unterscheidbaren Werkstoffen ausgebildet ist, wobei die beiden Werkstoffe insbesondere in aufeinander folgenden Spritzvorgängen aufgebracht sind, wobei vorzugsweise der Kern (11) des Griffes aus dem ersten radial innen liegenden Werkstoff ausgebildet ist und die berfläche des Griffs zumindest teilweise, vorzugsweise überwiegend aus zweitem Werkstoff ausgebildet ist.

13. Griff nach Anspruch 12, bei dem die als Informationsträger ausgebildete Stirnseite (10) mindestens teilweise, vorzugsweise überwiegend aus dem ersten Werkstoff gebildet wird.

14. Verfahren zur Herstellung eines Griffes nach einem der vorhergehenden Ansprüche, bei dem ein Spritzkern (30) mit einem ersten Werkstoff zur Bildung eines Griffkerns (21) umspritzt wird, anschließend von einer außerhalb des späteren Greifbereichs (27) des Griffs liegenden Einspritzstelle (25) ausgehend Material aus einem zweiten, vom ersten Werkstoff unterscheidbaren Werkstoff zur Bildung einer Griffummantelung für den späteren Greifbereich (27) des Griffs aufgespritzt wird, **dadurch gekennzeichnet, dass** der Griffkern (21) mit erhabenen Abschnitten bzw. Vorsprüngen (24) zumindest im klingennahen Bereich gespritzt wird, und der zweite Werkstoff von einer an der werkzeugseitigen Stirnseite (31) des Griffs angeordneten Einspritzstelle (25) durch zwischen den erhabenen Abschnitten bzw. Vorsprüngen (24) gebildete Fließkanäle (28) gespritzt wird:

15. Verfahren nach Anspruch 14, bei dem der Griffkern (21) aus dem ersten Werkstoff bis in die Oberfläche der werkzeugseitigen Stirnseite des Griffes gespritzt wird und diese mindestens zum Teil bildet und der zweite Werkstoff als radial außen anliegender Mantel aufgespritzt wird und stirnseitig die Oberfläche aus dem ersten Material freilässt.

## Claims

1. Grip for a hand tool with blade, particularly for a rotating tool, with a gripping section (27) and a quick rotating section (29), wherein the grip comprises a grip core made of a first plastic material and a sleeve injected on said core which features a plastic material differentiable from that of the grip core (21), which sleeve forms the gripping surface at least in the gripping section (27), **characterised in that** the grip core (21) features raised sections or protrusions (24) at least in the area near the blade section, which form an section open through at least one flow channel (28) of the second material, and that the sprue mark (25) for the sleeve material is located outside the gripping section (27) of the grip, on its tool end (31).

2. Grip for a hand tool according to claim 1, with which the second material forms a single-piece moulding.

3. Grip according to one of the preceding claims, wherein the materials are haptically and/or optically differentiable.

4. Grip according to one of the preceding claims, wherein the second material features a greater static friction coefficient than the first material.

5. Grip according to one of the preceding claims, wherein in the area near the blade section of the grip, discontinuous sections of the first material form the gripping surface and these sections are enclosed from all sides by continuous surface-area sections of the second material.

6. Grip according to one of the preceding claims, wherein the end surface, facing away from the tool, features a cap-shaped surface (26) made of the first material.

7. Grip according to one of the preceding claims, wherein the surface of the grip is formed as an information carrier, wherein the information, particularly in the formation of the section boundaries, between the surface-area sections of the first and second material is included.

8. Grip according to claim 7, wherein the section boundaries between the first and the second material are formed such that the contour of the sections of the first material represents the application purpose of the tool.

9. Grip according to one of the preceding claims, wherein the grip is moulded on a tool in particular on a screwdriver such that it cannot be lost.

10. Grip for a hand tool according to one of the preceding claims, wherein the face side is formed as an information carrier.

11. Grip according to claim 10, wherein the information is formed by means of optically recognisable contour lines (17) on the face side, wherein the contour lines (17) are preferably formed as a relief (13) on the face side.

12. Grip according to claim 11, wherein the contour line (17) is formed as boundary between materials at least optically differentiable from one another, wherein both the materials are applied particularly in successive moulding processes, wherein preferably the core (11) of the grip is formed of the first radially inlaid material and the surface of the grip is formed at least partly, preferably mainly of the second material.

13. Grip according to claim 12, wherein the face side (10) formed as information carrier is made at least partly, preferably mainly of the first material.

14. Process of manufacturing a grip according to one of the preceding claims, wherein a mould core (30) is extrusion coated with a first material to form a grip core (21), finally from a sprue point (25) lying outside the later grip section (27) of the grip, a second plastic material that is differentiable from the first material is injected to form a grip sleeve for later grip section (27) on the grip, **characterised in that** the grip core (21) with raised sections or protrusions (24) is injected at least in the area near the blade section, and the second material is injected from the sprue point (25) located on the tool-side face (31) of the grip through the flow channels (28) formed between raised sections or protrusions (24).

15. Process according to claim 14, wherein the grip core (21) of the first material is injected up to the surface of the tool-side face of the grip and at least partly forms this and the second material is injected as a sleeve layer radially outside, and leaves the surface free of the first material on the face.

## Revendications

1. Poignée pour un outil muni d'une lame, notamment pour un outil de tournage, comprenant une partie de préhension (27) et une partie à rotation rapide (29), la poignée présentant un noyau de poignée (21) constitué d'une première matière plastique et une enveloppe injectée sur celui-ci, constituée d'une matière plastique différenciable du matériau du noyau de poignée (21), cette enveloppe formant au moins la surface de la poignée dans la partie de préhension (27), **caractérisée en ce que** le noyau de poignée (21), au moins dans la partie proche de la lame, présente des sections ou des saillies convexes (24) qui forment une partie interrompue par au moins un canal d'écoulement (28) constitué du deuxième matériau, et **en ce que** le point d'application pour l'injection (25) du matériau de l'enveloppe est disposé à l'extérieur de la partie de préhension (27) de la poignée, sur l'extrémité (31) côté outil de celle-ci.

2. Poignée pour un outil à main selon la revendication 1, dans laquelle le deuxième matériau forme un corps formé d'une seule pièce.

3. Poignée selon l'une quelconque des revendications précédentes, dans laquelle les matériaux sont différentiables l'un de l'autre de manière haptique et/ou optique.

4. Poignée selon l'une quelconque des revendications précédentes, dans laquelle le deuxième matériau présente un coefficient d'adhérence plus important que le premier matériau.

5. Poignée selon l'une quelconque des revendications précédentes, dans laquelle des parties du premier matériau, discontinues dans la partie de la poignée proche de la lame, forment la surface de la poignée et dans laquelle ces parties sont entourées sur tous les côtés de parties de surface continues constituées du deuxième matériau.

6. Poignée selon l'une quelconque des revendications précédentes, dans laquelle la surface à l'extrémité détournée de l'outil présente une surface (26) en forme de calotte constituée du premier matériau.

7. Poignée selon l'une quelconque des revendications précédentes, dans laquelle la surface de la poignée est exécutée comme support d'information, l'information étant comprise notamment dans la formation des limites de la partie située entre les parties de surface constituées du premier matériau et du deuxième matériau.

8. Poignée selon la revendication 7, dans laquelle les limites des parties entre le premier matériau et le deuxième matériau sont exécutées de telle manière que le contour des parties du premier matériau représente le but de l'application de l'outil.

9. Poignée selon l'une quelconque des revendications précédentes, dans laquelle la poignée est formée de manière imperdable sur un outil, notamment un tournevis.

10. Poignée pour un outil selon l'une quelconque des revendications précédentes, dans laquelle le côté frontal est exécuté comme support d'information.

11. Poignée selon la revendication 10, dans laquelle l'information est formée sur le côté frontal par des lignes de contour (17) détectables optiquement, les lignes de contour (17) étant exécutées de préférence comme un relief (13) sur le côté frontal.

12. Poignée selon la revendication 11, dans laquelle les lignes de contour (17) sont exécutées comme limite entre des matériaux différenciables les uns des autres au moins optiquement, les deux matériaux étant appliqués notamment dans des opérations d'injection successives, le noyau (11) de la poignée étant de préférence exécuté dans le premier matériau situé radialement à l'intérieur et la surface de la poignée étant formée, du moins en partie, de préférence principalement dans le deuxième matériau.

13. Poignée selon la revendication 12, dans laquelle le côté frontal (10) formé comme support d'information est formé au moins en partie, de préférence principalement dans le premier matériau.

14. Procédé de fabrication d'une poignée selon l'une quelconque des revendications précédentes, dans lequel, un noyau d'injection (30) est injecté avec un premier matériau pour former le noyau de poignée (21), ensuite, à partir d'un point d'injection (25) situé à l'extérieur de la partie de préhension ultérieure (27) de la poignée, de la matière constituée d'un deuxième matériau différenciable du premier matériau, est injectée pour former une enveloppe de poignée pour la partie de préhension ultérieure (27) de la poignée, **caractérisé en ce que** le noyau de poignée (21) est injecté avec des sections ou des saillies convexes (24) au moins dans la partie proche de la lame, et **en ce que** le deuxième matériau est injecté depuis un point d'injection (25) disposé sur le côté frontal (31), côté outil, de la poignée à travers des canaux d'écoulement (28) formés par les sections ou saillies convexes (24).

15. Procédé selon la revendication 14, dans lequel le noyau de poignée (21) est injecté avec le premier matériau jusqu'à la surface du côté frontal, côté outil, de la poignée et forme celle-ci au moins en partie et dans lequel le deuxième matériau est injecté en tant qu'enveloppe adjacente radialement à l'extérieur et libère la surface, du côté frontal, du premier matériau.
